(19) Europäisches Patentamt
European Patent Office
Office européen des brevets

(11) Publication number: **0 114 755**
**B1**

## EUROPEAN PATENT SPECIFICATION

(45) Date of publication of patent specification: **06.09.89**

(51) Int. Cl.⁴: **C 01 F 5/14, C 10 L 1/12**

(21) Application number: **84300360.9**

(22) Date of filing: **20.01.84**

(54) **Aqueous stable magnesium hydroxide suspensions which are dispersible in oil.**

(30) Priority: **24.01.83 US 460328**

(43) Date of publication of application:
**01.08.84 Bulletin 84/31**

(45) Publication of the grant of the patent:
**06.09.89 Bulletin 89/36**

(84) Designated Contracting States:
**BE DE FR GB IT LU NL**

(56) References cited:
**CA-A-1 128 751**
**DE-B-2 659 933**
**US-A-3 957 674**
**US-A-4 298 482**

(73) Proprietor: **CALGON CORPORATION**
**Route 60-Campbell's Run Road**
**Robinson Township Pennsylvania 15205 (US)**

(72) Inventor: **Zupanovich, John D.**
**1620 Barr Avenue**
**Pittsburgh Pennsylvania 15215 (US)**
Inventor: **Myers, John G.**
**1160 Bower Hill Road, Apt., 308B**
**Pittsburgh Pennsylvania 15243 (US)**

(74) Representative: **Crampton, Keith John Allen et al**
**D YOUNG & CO 10 Staple Inn**
**London WC1V 7RD (GB)**

Courier Press, Leamington Spa, England.

**Description**

Magnesium hydroxide is widely used in the chemical industry as the starting material for the preparation of magnesium sulfite in the magnefite process, as a neutralizing agent, as a gas absorber and in other utilities. It has recently attracted attention as a sulfurous acid gas absorber in flue gas as well as an additive to boilers using heavy oil for prevention of both high and low temperature corrosion. Magnesium hydroxide is transported in the form of a slurry, cake or dry powder. A disadvantage of aqueous slurries or pastes is that the solid content is normally 35 percent at the highest. This markedly increases the transportation cost. In addition, there is a high tendency towards sedimentation or separation during transportation. The form, therefore, is unsuitable for transportation. If the solid content of magnesium hydroxide is increased to over 35 percent, by weight, the viscosity is often 10,000 mPa.s or higher so that a cake with no fluidity is formed. Although transportation in this form may be possible, the handling of the cake is very inconvenient. Moreover, the reversion of the cake to a slurry, which is necessary for practical uses of magnesium hydroxide, requires a large amount of power and time due to the high viscosity of the cake.

Alternatively, magnesium hydroxide is often transported in dry powder. This is not satisfactory, however, since even if finely pulverized, the particles do not completely recover their original size. Moreover, aggregation of the particles and reduction in the surface activity will result in a higher tendency towards sedimentation and lower reactivity.

It is therefore desirable to transport magnesium hydroxide in slurry form, but with a concentration comparable to the cake, but with good fluidity and decreased sedimentation tendency.

Attempts which have been made by prior art techniques to prepare aqueous suspensions with a high concentration of magnesium hydroxide have not been successful. Consequently, means have been adopted to transport magnesium hydroxide in organic oily preparations at a high concentration by the addition of emulsifiers, surface active agents or protective colloid forming materials (Patent US—A—4,229,309). In these cases, however, special uses, such as a fuel additive, are only possible because of the extender being an organic oily substance. Moreover, these preparations are expensive.

The magnesium hydroxide that is obtained by reacting lightly calcined dolomite with salt water containing magnesium halogenides and of calcium chloride as the mother liquor is known to yield fluid aqueous suspensions of high concentration (cf. U.S. Patent US—A—3,451,774). This macrocrystalline magnesium hydroxide prepared by this special method has a lower water content, good fluidity of the suspension, and ready filterability, but readily forms sediment.

Colloidal magnesium hydroxide with low tendency of sedimentation can be produced under specialized reaction conditions, but it is difficult to filter and the solid concentration is low.

U.S. Patent US—A—3,957,674 discloses the addition of sodium naphthalenesulfonate to magnesium hydroxide to form a suspension. It also discloses that the addition of sodium dodecyl benzene sulfonate to magnesium hydroxide is ineffective in forming a suspension.

The present invention results from the discovery that the addition of a specific surface active agent to a magnesium hydroxide suspension in the concentration range that is normally a cake with no fluidity provides a highly fluid aqueous suspension which has a very low tendency to sedimentation.

In accordance with the present invention, an aqueous oil-dispersible stable magnesium hydroxide suspension comprises a mixture of (a) a 33 to 60, preferably 50 to 60, % by weight aqueous slurry or paste of magnesium hydroxide; and (b) an alkylbenzesulfonate emulsifier.

When proceeding in accordance with the present invention an increase in solids requires less additive for viscosity and stability control.

In accordance with the present invention, an aqueous stable oil-dispersible magnesium hydroxide suspension is prepared by mixing (a) 33 to 60, preferably 50 to 60, % by weight aqueous slurry or paste of magnesium hydroxide; and (b), as an emulsifier, one or more of isopropylamine dodecyl benzene sulfonate, ammonium dodecyl benzene sulfonate, triethanolamine dodecyl benzene sulfonate, tridecyl benzene sulfonic acid and dodecyl benzene sulfonic acid.

Also in accordance with the present invention, corrosion in fuel burning boilers is inhibited by adding to the fuel a corrosion inhibiting amount of the aqueous stable oil-dispersible magnesium hydroxide suspension of the invention.

Magnesium hydroxide used in the invention may be obtained by conventional reactions such as treating sea water or salt water containing magnesium chloride with an alkali, for example, quicklime or lightly calcined dolomite.

Magnesium hydroxide normally remains in a slurry until concentrated to about 35 percent, by weight, and further concentration is possible by such a means as spontaneous sedimentation, filtration or centrifugal separation. Concentration to a higher degree is also possible by addition of dry powders to the slurry or, in the alternative, by the addition of water to the dry powders.

Examples include the alkyl benzene sulfonates mentioned above.

The ratio of emulsifier to magnesium hydroxide slurry or paste is preferably 1:5 to 1:99, particularly 1:14 to 1:98.5, by weight.

Antifoaming agents may also be added to the suspension to eliminate any foaming and to modify the viscosity. Examples include polydimethyl siloxane and polydimethyl siloxane with silica. Combustion catalysts may also be included, for example, cerium, manganese, iron, cobalt and copper as inorganic or organic compounds.

The suspension may be added to any fuel; for example, residual oil, black liquor and coal; to inhibit corrosion in fuel burning boilers. At least 0.1 ppm, preferably 0.1 to 200 ppm, is usually added to the fuel.

Examples

Example 1

To 285 grams of magnesium hydroxide at 57.5 percent active concentration, by weight, was added 15 grams of isopropylamine dodecyl benzene sulfonate. Additional slurries were prepared varying the percent of dispersant. The mixtures were blended with a mixer at low shear for five minutes. The resulting liquid dispersions were cooled to 25°C and the viscosities in mPa.s measured by a Brookfield RVF viscometer using a No. 3 spindle at 20 RPM:

| Weight Percent Concentration of Dispersant | Viscosity |
| --- | --- |
| 5 | 1750 |
| 4.5 | 1000 |
| 4 | 450 |
| 3 | 325 |
| 2 | 350 |
| 1.5 | 800 |

The dispersions were still stable after nine months. No solid-liquid phase separation occurred during the nine-month period.

Example 2

To 284.7 grams of magnesium hydroxide at 57.5 percent active concentration, by weight, was added 15 grams of isopropylamine dodecyl benzene sulfonate and 0.3 grams of polydimethyl siloxane, an antifoaming agent. Additional slurries were prepared varying the percent of dispersant. The mixtures were blended with a mixer at low shear for five minutes. The liquid dispersions were cooled to 25°C and the viscosities in mPa.s were measured by the method described in Example 1.

| Weight Percent Concentration of Dispersant | Percent Antifoam | Viscosity |
| --- | --- | --- |
| 5 | 0.1 | 2500 |
| 4.5 | 0.1 | 1300 |
| 4 | 0.1 | 450 |

The dispersions were still stable after three months.

Example 3

To 285 grams of magnesium hydroxide at 57.5 percent active concentration, by weight, was added 15 grams of isopropylamine dodecylbenzene sulfonate and 3.77 grams of cerium hydroxide. The mixture was blended with a mixer at low shear for five minutes. The resulting liquid dispersion was cooled to 25°C. The dispersion was still stable after three months.

Example 4

To 282 grams of magnesium hydroxide at 57.5 percent active concentration, by weight, was added 18 grams of isopropylamine dodecyl benzene sulfonate. The mixture was blended with a mixer at low shear for five minutes. To this liquid dispersion was added 6.9 grams of organometallic manganese compound. The mixture was remixed for three minutes to uniformly disperse the organometallic manganese. The dispersion was then cooled at 25°C. The dispersion was still stable after three months.

3

**Claims**

1. An aqueous stable oil-dispersible magnesium hydroxide suspension comprising a mixture of (a) a 33 to 60% by weight aqueous slurry or paste of magnesium hydroxide; and (b) an alkylbenzenesulfonate emulsifier.

2. A suspension as claimed in Claim 1, in which a 50 to 60% by weight aqueous slurry or paste of magnesium hydroxide is used.

3. A suspension as claimed in Claim 1 or 2, in which the emulsifier is one or more of isopropylamine dodecyl benzene sulfonate, ammonium dodecyl benzene sulfonate, triethanolamine dodecyl benzene sulfonate, tridecyl benzene sulfonic acid, and dodecyl benzene sulfonic acid.

4. A suspension as claimed in any preceding claim, in which the ratio of the emulsifier to the magnesium hydroxide slurry or paste is 1:5 to 1:99, by weight.

5. A process for the preparation of an aqueous stable oil-dispersible magnesium hydroxide suspension, comprising mixing (a) a 33 to 60% by weight aqueous slurry or paste of magnesium hydroxide; and (b), as an emulsifier, one or more of isopropylamine dodecyl benzene sulfonate, ammonium dodecyl benzene sulfonate, triethanolamine dodecyl benzene sulfonate, tridecyl benzene sulfonic acid, and dodecyl benzene sulfonic acid.

6. A process as claimed in Claim 5, in which a 50 to 60% by weight aqueous slurry or paste of magnesium hydroxide is used.

7. A method of inhibiting corrosion in fuel-burning boilers comprising adding to the fuel a corrosion inhibiting amount of an aqueous stable magnesium hydroxide suspension as claimed in Claim 1.

8. A method as claimed in Claim 7, in which a 50 to 60% by weight aqueous slurry or paste of magnesium hydroxide is used.

9. A method as claimed in Claim 7 or 8, in which the alkylbenzenesulfonate emulsifier is as defined in Claim 3.

**Patentansprüche**

1. Wässrige stabile, öldispergierbare Magnesiumhydroxidsuspension, die eine Mischung aus (a) einer 33 bis 60 gew.-%igen wässrigen Magnesiumhydroxidaufschlämmung oder -paste und (b) einem Alkylbenzolsulfonatemulgator umfaßt.

2. Suspension, wie in Anspruch 1 beansprucht, worin eine 50-bis 60 gew.-%ige wässrige Magnesiumhydroxidaufschlämmung oder -paste verwandt wird.

3. Suspension, wie in Anspruch 1 oder 2 beansprucht, worin der Emulgator eines oder mehrere aus Isopropylamindodecylbenzolsulfonat, Ammoniumdodecylbenzolsulfonat, Triethanolamindodecylbenzolsulfonat, Tridecylbenzolsulfonsäure und Dodecylbenzolsulfonsäure ist.

4. Suspension, wie in einem der vorstehenden Ansprüche beansprucht, worin das Verhältnis von Emulgator zur Magnesiumhydroxidaufschlämmung oder -paste 1:5 bis 1:99, nach dem Gewicht, beträgt.

5. Verfahren zur Herstellung einer wässrigen stabilen, öldispergierbaren Magnesiumhydroxidsuspension, das das Mischen von (a) einer 33 bis 60 gew.-%igen wässrigen Magnesiumhydroxidaufschlämmung oder -paste und (b) einem oder mehreren aus Isopropylamindodecylbenzolsulfonat, Ammoniumdodecylbenzolsulfonat, Triethanolamindodecylbenzolsulfonat, Tridecylbenzolsulfonsäure und Dodecylbenzolsulfonsäure als Emulgator umfaßt.

6. Verfahren, wie in Anspruch 5 beansprucht, worin eine 50 bis 60 gew.-%ige wässrige Magnesiumhydroxidaufschlämmung oder -paste verwandt wird.

7. Verfahren zur Inhibierung der Korrosion in Brennstoffverbrennenden Boilern, das die Zugabe einer korrosionsinhibierenden Menge einer wässrigen stabilen Magnesiumhydroxidsuspension, wie in Anspruch 1 beansprucht, zum Brennstoff umfaßt.

8. Verfahren, wie in Anspruch 7 beansprucht, worin eine 50 bis 60 gew.-%ige wässrige Magnesiumhydroxidaufschlämmung oder -paste verwandt wird.

9. Verfahren, wie in Anspruch 7 oder 8 beansprucht, worin der Alkylbenzolsulfonatemulgator wie in Anspruch 3 definiert ist.

**Revendications**

1. Suspension aqueuse stable d'hydroxyde de magnésium, dispersable dans l'huile, qui comprend un mélange de (a) une pâte ou boue aqueuse de 33 à 60% en poids d'hydroxyde de magnésium; et (b) un émulsifiant alkylbenzènesulfonate.

2. Suspension selon la revendication 1, dans laquelle on utilise une pâte ou boue aqueuse de 50 à 60% en poids d'hydroxyde de magnésium.

3. Suspension selon la revendication 1 ou 2, dans laquelle l'émulsifiant est constitué par un ou plusieurs produits choisis parmi le dodécylbenzènesulfonate d'isopropylamine, le dodécylbenzènesulfonate d'ammonium, le dodécylbenzènesulfonate de triéthanolamine, l'acide tridécylbenzènesulfonique et l'acide dodécylbenzènesulfonique.

4. Suspension selon l'une quelconque des revendications précédentes, dans laquelle la proportion de l'émulsifiant à la pâte ou boue d'hydroxyde de magnésium est de 1:5 à 1:99, en poids.

5. Procédé de préparation d'une suspension aqueuse stable d'hydroxyde de magnésium, stable dans l'huile, qui comprehend de mélanger (a) une pâte ou boue de 33 à 60% en poids d'hydroxyde de magnésium; et (b) un émulsifiant, tel qu'un ou plusieurs produits choisis parmi le dodécylbenzènesulfonate d'isopropylamine, le dodécylbenzènesulfonate d'ammonium, le dodécylbenzènesulfonate de triéthanolamine, l'acide tridécylbenzènesulfonique, et l'acide dodécylbenzènesulfonique.

6. Procédé selon la revendication 5, dans lequel on utilise une pâte ou boue aqueuse de 50 à 60% en poids d'hydroxyde de magnésium.

7. Procédé d'inhibition de corrosion dans les chaudières brûlant un combustible qui comprend d'ajouter à un combustible une quantité inhibant la corrosion d'une suspension aqueuse stable d'hydroxyde de magnésium selon la revendication 1.

8. Procédé selon la revendication 7, dans lequel on utilise une pâte ou boue aqueuse de 50 à 60% en poids d'hydroxyde de magnésium.

9. Procédé selon la revendication 7 ou 8, dans lequel l'émulsifiant alkylbenzènesulfonate est comme défini dans la revendication 3.